# EUROPÄISCHE PATENTSCHRIFT

(11) **EP 1 334 548 B1**
(45) Veröffentlichungstag und Bekanntmachung des Hinweises auf die Patenterteilung: **09.04.2008**
(21) Anmeldenummer: 01991724.4
(22) Anmeldetag: 14.11.2001
(51) Int. Cl.: H02K 7/08, F16C 25/04, F16C 25/08, H02K 5/167

(54) **ANORDNUNG ZUM AXIALSPIELAUSGLEICH**
ARRANGEMENT FOR AXIAL SLACK COMPENSATION
ENSEMBLE POUR COMPENSATION DE JEU AXIAL

(30) Priorität: 17.11.2000 EP 00125136
(43) Veröffentlichungstag der Anmeldung: 13.08.2003
(73) Patentinhaber: VDO Automotive AG, 93055 Regensburg (DE)
(72) Erfinder: ZAPS, Klaus, 97332 Volkach (DE)
(86) Internationale Anmeldenummer: PCT/EP2001/013198
(87) Internationale Veröffentlichungsnummer: WO 2002/041472

(56) Entgegenhaltungen:
- DE-C- 19 839 407
- US-A- 3 549 218

## Beschreibung

Die Erfindung bezieht sich auf eine Anordnung zum Axialspielausgleich gemäß Patentanspruch 1.

Durch die EP 0 133 527 B2 ist eine Anordnung zur Begrenzung des Axialspiels einer gleitgelagerten Rotorwelle eines Motorantriebs gegenüber dessen Gehäuseteil derart bekannt, dass gemäß einem jeweils gemessenen Axialspiel eine Scheibe entsprechender Scheibendicke als axiales Anlaufteil gehäuseseitig feststeckbar ist.

Durch die FR-A-1 415 584 bzw. FR-A-2 253 940 sind Motor- bzw. Motorgetriebe-Anordnungen mit einem elastischen axialen Anlaufteil in Form von gehäuseseitig zu haltenden Federelementen bekannt.

Gemäß Aufgabe vorliegender Erfindung soll ein Axialspielausgleich mit demgegenüber, insbesondere für einen als Massenserienartikel herzustellenden Kraftfahrzeug-Verstellantrieb vorteilhaft, vermindertem Bauteile- und Fertigungsaufwand bei gewährleisteter Betriebssicherheit geschaffen werden.

Die Lösung dieser Aufgabe gelingt erfindungsgemäß durch eine Anordnung zum Axialspielausgleich gemäß Patentanspruch 1; vorteilhafte Ausgestaltungen der Erfindung sind jeweils Gegenstand der Unteransprüche.

Durch die Integration eines, üblicherweise zur axialen Lage-Anschlagsicherung bereits vorhandenen, Sicherungselementes, insbesondere eines in einen Rotorwelleneinstich radial einzudrückenden Spreizringes, mit einem Federelement, insbesondere in Form von Federelement-Armen, vermindern sich die Fertigungsteile und die Montageschritte.

Der Fertigungsaufwand ist weiter reduzierbar, wenn das Sicherungselement und das Federelement Teile eines einstückigen Blech-Flachstanzteiles sind.

Durch eine zwischen dem Sicherungs- und Federelement einerseits und dem Statorteil andererseits drehfest zu dem Sicherungs- und Federelement vorgesehene Zwischenscheibe mit axialen Anschlag-Puffern an ihrer einen Stirnseite und einer Gleitfläche an ihrer anderen, zum Anlauf an den Statorteil vorgesehenen Stirnseite lässt sich sowohl ein definierbarer Federweg bei der elastischen Verformung des Federelementes als auch eine hohe aufgrund geringen Verschleißes gewährleistete Betriebssicherheit bei langen Betriebsstandzeiten gewährleisten.

Die Erfingung sowie vorteilhafte Ausgestaltungen der Erfindung gemäß Merkmalen der Unteransprüche werden im folgenden anhand von Ausführungsbeispielen in der Zeichnung näher erläutert; darin zeigen:
- FIG 1: in perspektivischer Explosionsdarstellung den Rotor eines Kommutatormotors mit gegenüber einem Statorteil erfindungsgemäßem Axialspielausgleich;

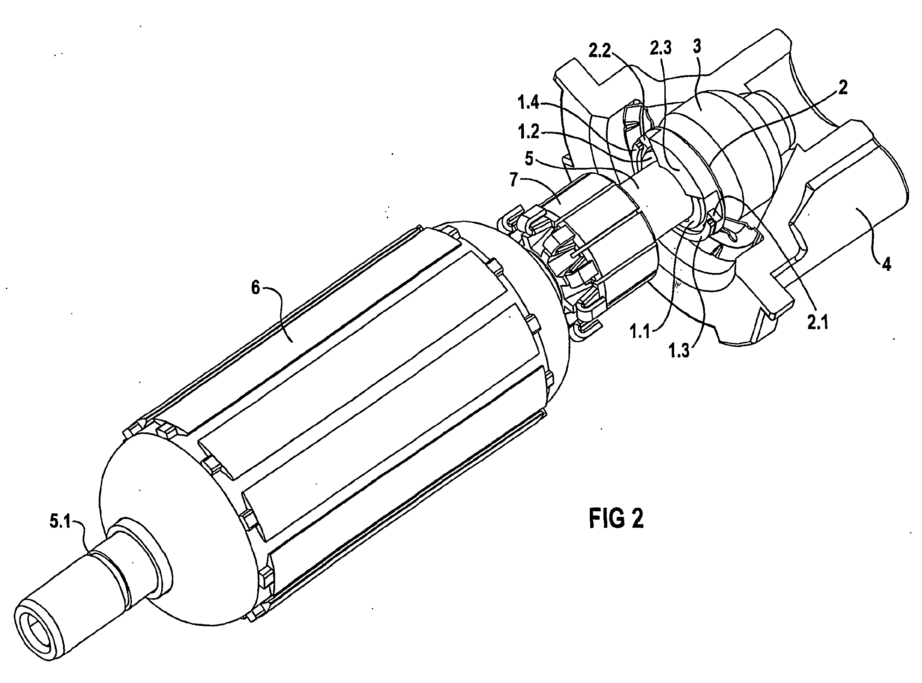

- FIG 2: die Anordnung gemäß FIG 1 in betriebsmäßiger Montagestellung;
- FIG 3: in perspektivischer Explosionsdarstellung ein Sicherungselement mit erfindungsgemäß integriertem Federelement und eine zugeordnete Zwischenscheibe;
- FIG 4: die Anordnung gemäß FIG 3 in betriebsmäßiger Montagestellung;
- FIG 5: die Anordnung gemäß FIG 4 in einer anderen Ansichtsrichtung.

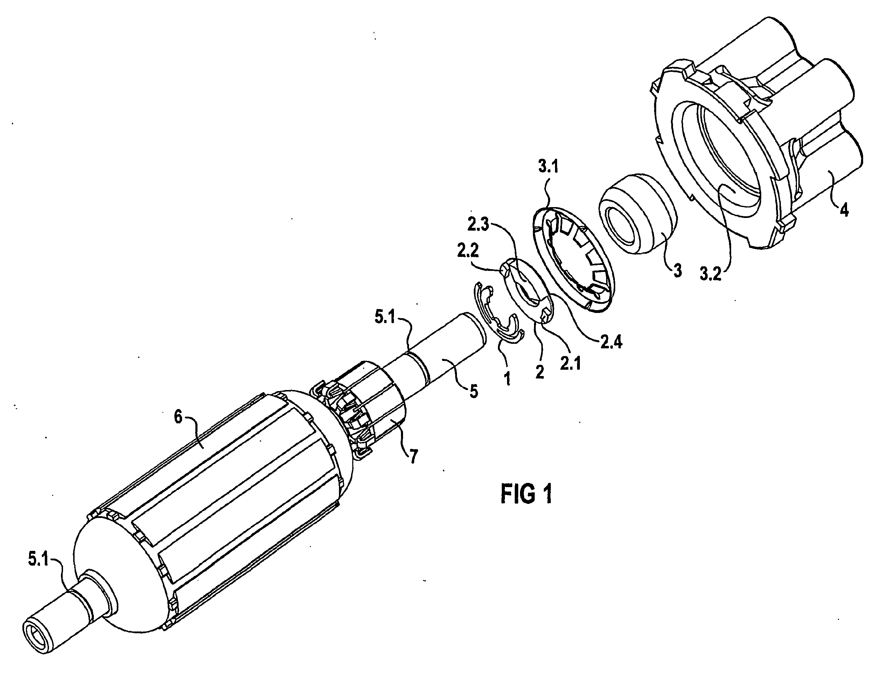

FIG 1 zeigt in perspektivischer Explosionsdarstellung einen gegenüber einem Statorteil 4 mit einer erfindungsgemäßen Anordnung zum Axialspielausgleich versehenen Rotor mit einer Rotorwelle 5 und darauf gehaltertem, noch unbewickelten Rotorpaket 6 sowie Kommutator 7. Die Rotorwelle 5 ist in einer Kalotte 3 gelagert, die mittels einer Klemmbrillen 3.1 in einer Kalottenaufnahme 3.2 des Statorteils 4 einstellbar gehalten ist.

Zur axialen Abstützung der Rotorwelle 5 gegenüber dem Statorteil 4 dient ein Sicherungselement 1 in Form eines Spreizringes 1.1;1.2, das im vorliegenden Ausführungsbeispiel zur axialen Fixierung in einen Welleneinstich in Form einer Ringnut 5.1 eingreift und durch Klemmschluß mittels dazu radial aufgesteckter Spreizfinger 1.1 bzw.1.2 auch tangential fixierbar ist.

Zum elastisch federnden Axialspielausgleich zwischen der Rotorwelle 5 einerseits und dem Statorteil 4 andererseits ist erfindungsgemäß das Sicherungselement 1 als Federelement 1.3;1.4 ausgebildet und weist dazu je einen, zu jedem Spreizfinger 1.1 bzw.1.2 konzentrischen äußeren Federschenkel 1.3 bzw. 1.4 auf, der jeweils mit einem freien Schenkelende axial elastisch auslenkbar und mit seinem anderen Schenkelende über ein Joch 1.5 einstückig mit den Spreizfingern 1.2 bzw.1.3 an ihren den freien Schenkelenden abgewandten Enden verbunden ist.

Axial zwischen der Abstützung an dem mit dem Sicherungselement 1 integrierten Federelement 1.3;1.4 einerseits und der Abstützung an dem Statorteil 4 bzw. an dem von diesem gehalterten Kalottenlager 3 andererseits ist eine zu der Rotorwelle 5 bewegliche, mit dem Sicherungselement 1 in Drehmitnahme stehende, Zwischenscheibe 2 vorgesehen, die in vorteilhafter Weise an ihrer dem Statorteil 4 bzw. der Kalotte 3 zugewandten Stirnseite eine korrespondierende Gleitfläche 2.4 bzw. an ihrer dem Sicherungselement 1 bzw. Federelement 1.3;1.4 zugewandten Stirnseite axial vorstehende Anschlag-Puffer 2.1;2.2 aufweist, über die das Federelement 1.3;1.4, insbesondere die freien Enden von dessen Federschenkeln 1.3 bzw.1.4, axial elastisch wegdrückbar sind.

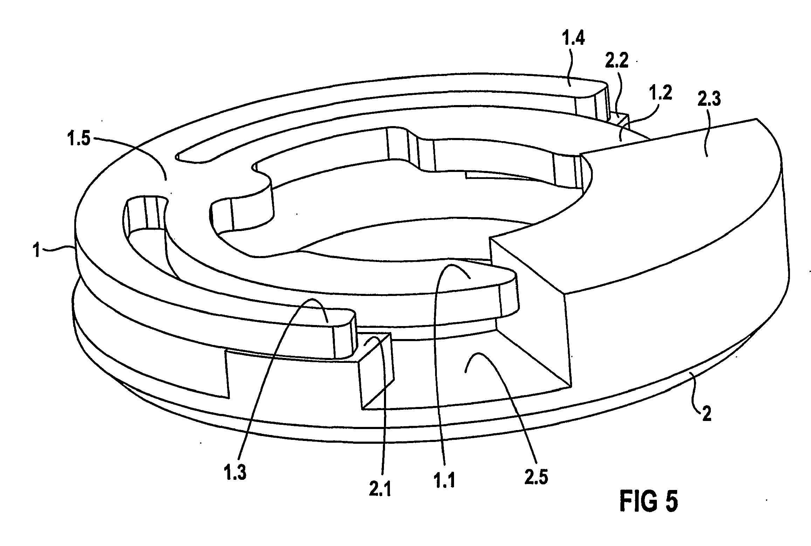

Wie insbesondere aus FIG 5 ersichtlich, ist durch die axiale Höhe der Anschlag-Puffer 2.1 bzw.2.2 gegenüber der bei einem Axialspielausgleich als axialer Anschlag für die im unausgelenkten Zustand mit den Federschenkeln 1.3 bzw.1.4 in einer Ebene liegenden Spreizfingern 1.1 bzw.1.2 wirkende Grundplatte 2.5 bzw.2.6 der maximale axiale Federweg auf einfache Weise festlegbar.

Zur gegenseitigen Ausrichtung der Zwischenscheibe 2 einerseits und des Sicherungselementes 1 mit den Federschenkeln 1.3 bzw.1.4 andererseits, insbesondere in für eine einfache axiale Steck-Montage vorteilhafter Weise, weist die Zwischenscheibe 2 ein axial vorstehendes, betriebsmäßig zwischen den freien Enden der Federschenkel 1.1 bzw.1.2 angeordnetes Paßstück 2.3 auf.

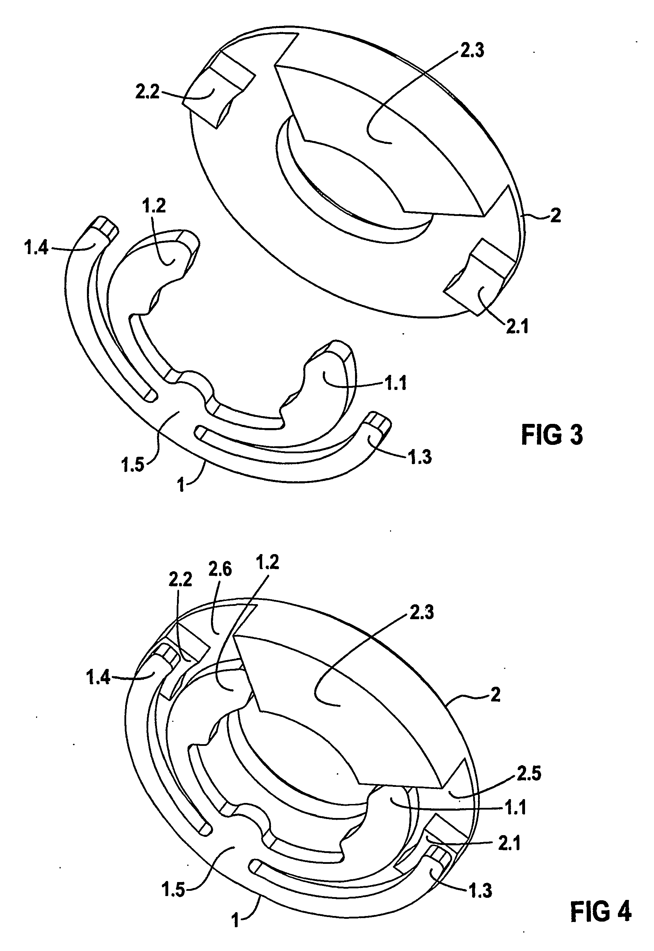

In fertigungs- und montagetechnisch vorteilhafter Weise bestehen - wie insbesondere aus FIG 3 ersichtlich - das Sicherungselement 1 mit seinen Spreizfingern 1.1 bzw.1.2 und das Federelement 1.3;1.4 mit seinen Federschenkeln 1.3 bzw.1.4 aus einem - durch eine Joch-Verbindung 1.5 - einstückigen Blech-Flachstanzteil und die Zwischenscheibe 2 einschließlich der Anschlag-Puffer 2.1 bzw.2.2 und des Paßstücks 2.3 aus einem einstückigen, insbesondere spritzgegossenen, Kunststoffteil.

Der Gegenstand der Erfindung einschließlich einer wesentlichen Ausgestaltung lässt sich wie folgt kurz charakterisieren:

Zur Minderung des Bauteile- und des Fertigungsaufwandes bei einem Axialspielausgleich einer Rotorwelle 5 relativ zu einem Statorteil 4 ist ein auf der Rotorwelle 5 fixiertes axiales Sicherungselement 1, insbesondere in Form eines radial aufsteckbaren Spreizringes 1.1;1.2, mit einem axial elastisch gegen den Statorteil 4 im Sinne eines Axialspielausgleiches andrückbaren Federelement 1.3;1.4, insbesondere in Form von einstückig angestanzten Federschenkeln 1.3;1.4 integriert; durch eine Zwischenscheibe 2 mit gegen das Federelement 1.3;1.4 andrückenden axialen Anschlag-Puffern 2.1;2.2 an der einen Stirnseite und einer Gleitfläche 2.4 gegenüber dem Statorteil 4, insbesondere der Lagerstirnfläche eines Gleitlagers 3, an der anderen Stirnseite ist ein besonders betriebssicherer Axialspielausgleich mit definierbarem Federweg gewährleistbar.

## Patentansprüche

1. Anordnung zum Axialspielausgleich einer Rotorwelle (5) relativ zu einem diese aufnehmenden Statorteil (4), insbesondere einem Rotorwellen-Lager (3;3.1;3.2),
- mit einem auf der Rotorwelle (5) fixierbaren und deren Umfang zumindest über einen tangentialen Teilbereich umfassenden axialen Sicherungselement (1), insbesondere in Form eines auf die Rotorwelle (5) aufsteckbaren Spreizringes (1.1;1.2);
- mit einem axial elastisch gegen den Statorteil (4) im Sinne eines Axialspielausgleiches andrückenden Federelement (1.3;1.4) als Teil des Sicherungselementes (1).

2. Anordnung nach Anspruch 2
- mit einer Ausbildung des Federelementes (1.3;1.4) als einstückiger Bestandteil des Sicherungselementes (1).

3. Anordnung nach Anspruch 2
- mit einer Ausbildung des Sicherungselementes (1) und des Federelementes (1.3;1.4) als einstückige Bestandteile eines Blech-Flachstanzteiles.

4. Anordnung nach zumindest einem der Ansprüche 1-3
- mit einer tangentialen Umfassung des Sicherungselementes (1) durch das Federelement (1.3;1.4) mittels zumindest eines Federschenkels (1.3 bzw.1.4), der jeweils mit einem freien Ende elastisch an dem Statorteil (4), insbesondere mittelbar, abstützbar und mit seinem anderen Ende an dem Sicherungselement (1) fixiert ist.

5. Anordnung nach zumindest einem der Ansprüche 1-4
- mit einer axialen Fixierung des Sicherungselementes (1) relativ zu der Rotorwelle (5) durch Eingriff, insbesondere radiale Einsteckbarkeit, in eine Ringnut (5.1) der Rotorwelle (5).

6. Anordnung nach zumindest einem der Ansprüche 1-5
- mit einer federelastischen axialen Abstützbarkeit der Rotorwelle (5) an einer Kalotte (3) eines von dem Statorteil (4) aufgenommenen Rotorwellen-Lagers (3;3.1;3.2) in Form eines Kalottenlagers.

7. Anordnung nach zumindest einem der Ansprüche 1-6
- mit einer relativ zu der Rotorwelle (5) beweglichen Zwischenscheibe (2) axial zwischen dem Federelement (1.3;1.4) einerseits und dessen Abstützung an dem Statorteil (4) andererseits;
- mit einer Ausbildung der einen Stirnseite der Zwischenscheibe (2) als Gleitfläche (2.4) für die mittelbare bzw. unmittelbare Abstützung des Federelementes (1.3;1.4) an dem Statorteil (4);
- mit einer Ausbildung der anderen Stirnseite der Zwischenscheibe (2) als Andruckmittel zur elastischen Verformung des Federelementes (1.3;1.4) im Sinne eines Axialspielausgleiches.

8. Anordnung nach Anspruch 7
- mit einer axialen Formschluß-Steckverbindung zwischen dem Sicherungselement (1) und der Zwischenscheibe (2), insbesondere im Sinne einer gegenseitigen Drehmitnahme und axialen sowie tangentialen Ausrichtung.

9. Anordnung nach Anspruch 7 und/oder 8
- mit einer Ausbildung der Andruckmittel in Form von gegenüber der Zwischenscheibe (2) axial vorstehenden, durch ihren axialen Abstand gegenüber dieser die maximale elastische Auslenkung des Federelementes (1.3;1.4) definierenden Anschlag-Puffern (2.1;2.2).

10. Anordnung nach zumindest einem der Ansprüche 1-9
- mit einer Ausbildung der Zwischenscheibe (2) als, vorzugsweise einstückig die Anschlag-Puffer (2.1;2.2) und Formschlußmittel (2.3) mitumfassendes, Kunststoffteil.

## Claims

1. Arrangement for axial slack compensation of a rotor shaft (5) relative to a stator part (4) in which it is mounted, particularly a rotor shaft bearing (3; 3.1; 3.2).
- with an axial securing element (1) that can be attached to the rotor shaft (5) and encloses its circumference at least over a tangential part area, particularly in the form of an expanding ring (1.1; 1.2) that can be fitted onto the rotor shaft (5);
- with an elastic element (1.3; 1.4) that can be elastically pressed axially against the stator part (4) in the sense of compensation for the axial slack, as part of the securing element (1).

2. Arrangement in accordance with claim 2
- with a design of the elastic element (1.3; 1.4) as a single-piece component of the securing element (1).

3. Arrangement in accordance with claim 2
- with a design of the securing element (1) and of the elastic element (1.3; 1.4) as a part pressed as a single piece from sheet metal.

4. Arrangement in accordance with at least one of claims 1-3
- with a tangential enclosure of the securing element (1) by the elastic element (1.3; 1.4) by means of at least one elastic limb (1.3 or 1.4) which in each case can be elastically supported by a free end to the stator part (4), particularly indirectly, and is fixed at its other end to the securing element (1).

5. Arrangement in accordance with at least one of claims 1-4
- with an axial attaching of the securing element (1) relative to the rotor shaft (5) by engagement, particularly radial plug-in, into an annular groove (5.1) of the rotor shaft (5).

6. Arrangement in accordance with at least one of claims 1-5
- with an elastic-sprung axial support of the rotor shaft (5) on a cap (3) of a rotor shaft bearing (3; 3.1; 3.2) in the form of a cap bearing, said rotor shaft bearing being housed by the stator part (4).

7. Arrangement in accordance with at least one of claims 1-6
- with an intermediate disk (2) that can be moved relative to the rotor shaft (5) axially between the elastic element (1.3; 1.4) on one side and its support on the stator part (4) on the other side;
- with a design of one front face of the intermediate disk (2) as a sliding face (2.4) for the indirect or direct support of the elastic element (1.3; 1.4) on the stator part (4) ;
- with a design of the other front face of the intermediate disk (2) as a pressure means for elastic deformation of the elastic element (1.3; 1.4) in the sense of axial slack compensation.

8. Arrangement in accordance with claim 7
- with an axial positive interlocking plug-in connection between the securing element (1) and the intermediate disk (2), particularly in the sense of a mutual rotational pickup and axial as well as tangential alignment.

9. Arrangement in accordance with claim 7 and/or 8
- with a design of the pressure means in the form of stop buffers (2.1; 2.2) projecting axially opposite the intermediate disk (2) and, by their axial clearance from this, defining the maximum elastic deflection of the elastic element (1.3; 1.4).

10. Arrangement in accordance with at least one of claims 1-9
- with a design of the intermediate disk (2) as a plastic part, preferably including the stop buffers (2.1; 2.2) and positive interlocking means (2.3) as a single piece.

## Revendications

1. Disposition pour la compensation de jeu axial d'un arbre de rotor (5) par rapport à une pièce de stator (4) recevant cet arbre, en particulier par rapport à un palier (3;3.1;3.2) de l'arbre de rotor,
- comportant un élément axial de sécurité (1) pouvant être fixé sur l'arbre de rotor (5) et entourant sa périphérie sur au moins une zone tangentielle partielle, en particulier sous la forme d'une bague de contrainte (1.1;1.2) enfichable sur l'arbre de rotor (5),
- comportant un élément de ressort (1.3;1.4) en appui axial élastique contre la pièce de stator (4) en vue de compenser le jeu axial, comme pièce de l'élément de sécurité (1) .

2. Disposition suivant la revendication 1,
- comportant une réalisation de l'élément de ressort (1.3;1.4) comme constituant en une seule pièce de l'élément de sécurité (1).

3. Disposition suivant la revendication 2,
- comportant la réalisation de l'élément de sécurité (1) et de l'élément de ressort (1.3;1.4) comme constituant en une seule pièce d'une pièce plane estampée en tôle.

4. Disposition suivant au moins l'une des revendications 1-3,
- comportant un entourage tangentiel de l'élément de sécurité (1) par l'élément de ressort (1.3;1.4) au moyen d'au moins un bras de ressort (respectivement 1.3;1.4), qui est chaque fois fixé élastiquement avec son extrémité libre à la pièce de stator (4), en particulier indirectement, en pouvant s'appuyer, et avec son autre extrémité, sur l'élément de sécurité (1).

5. Disposition suivant au moins l'une des revendications 1-4,
- comportant une fixation axiale de l'élément de sécurité (1) par rapport à l'arbre de rotor (5), par engagement, en particulier par une possibilité par enfoncement, dans une rainure annulaire (5.1) de l'arbre de rotor (5).

6. Disposition suivant au moins l'une des revendications 1-5,
- comportant une possibilité d'appui axial élastique par ressort de l'arbre de rotor (5) contre une calotte (3) d'un palier (3;3.1;3.2) sous la forme d'un palier de calotte.

7. Disposition suivant au moins l'une des revendications 1-6,
- comportant une bague intermédiaire (2) mobile par rapport à l'arbre de rotor (5) axialement entre, d'un côté, l'élément à ressort (1.3;1.4) et, de l'autre côté, son appui contre la pièce de stator (4),
- comportant une réalisation de l'une des faces frontale de la bague intermédiaire (2) sous la forme d'une surface de glissement (2.4) pour l'appui direct ou indirect de l'élément à ressort (1.3;1.4) contre la pièce de stator (4),
- comportant une réalisation de l'autre face frontale de la bague intermédiaire (2) sous la forme d'un moyen d'appui pour la déformation élastique de l'élément à ressort (1.3;1.4) en vue d'une compensation du jeu axial.

8. Disposition suivant la revendication 7,
- comportant une liaison axiale par engagement avec conjugaison de formes entre l'élément de sécurité (1) et la bague intermédiaire (2), en particulier en vue d'un entraînement en rotation réciproque et un alignement axial et tangentiel.

9. Disposition suivant la revendication 7 et/ou 8,
- comportant une réalisation du moyen d'appui sous la forme de tampons de butée (2.1;2.2) dépassant axialement par rapport à la bague intermédiaire (2), et définissant, par leur distance axiale par rapport à celle-ci le débattement élastique maximal de l'élément à ressort (1.3;1.4).

10. Disposition suivant au moins l'une des revendications 1-9,
- comportant une réalisation de la bague intermédiaire (2) sous la forme d'une pièce en matière plastique, de préférence en une seule pièce, englobant ensemble les tampons de butée (2.1;2.2) et la pièce (2.3) réalisant la conjugaison de formes.
